# EUROPEAN PATENT SPECIFICATION

(11) **EP 1 952 082 B1**
(45) Date of publication and mention of the grant of the patent: **18.09.2019**
(21) Application number: 06798351.0
(22) Date of filing: 20.09.2006
(51) Int. Cl.: F27D 1/16, C04B 35/00

(54) **METHOD OF INJECTING AN AGGREGATE INTO A SMALL GAP FORMED IN THE BOTTOM PORTION OF A BLAST FURNACE AND AGGREGATE USED THEREFOR**
VERFAHREN ZUM EINSPRITZEN EINES AGGREGATS IN EINEN IM BODENABSCHNITT EINES HOCHOFENS AUSGEBILDETEN KLEINEN SPALT UND DAFÜR VERWENDETES AGGREGAT
PROCEDE DESTINE A INJECTER UN AGREGAT DANS UN PETIT ESPACE FORME DANS LA PARTIE SOLE D'UN HAUT FOURNEAU ET AGREGAT UTILISE A CETTE FIN

(30) Priority: 26.09.2005 JP 2005277548
(43) Date of publication of application: 06.08.2008
(73) Proprietor: Nippon Steel Corporation, Tokyo (JP)
(72) Inventor: OTSUBO, Hiroaki, c/o NIPPON STEEL CORPORATION, Tokai-shi, Aichi, 476-8686 (JP); MATSUDA, Tsuyoshi, c/o NIPPON STEEL CORPORATION, Tokai-shi, Aichi, 476-8686 (JP); TAKEWAKI, Kenji, c/o NIPPON STEEL CORPORATION, Tokai-shi, Aichi, 476-8686 (JP); NITTA, Michio, c/o NIPPON STEEL CORPORATION, Futtsu-shi, Chiba, 293-8511 (JP)
(74) Representative: Vossius & Partner Patentanwälte Rechtsanwälte mbB
(86) International application number: PCT/JP2006/319093
(87) International publication number: WO 2007/034974

(56) References cited:
- EP-A1- 1 233 077
- EP-A2- 0 004 509
- WO-A-2005/085155
- JP-A- 2004 315 348
- US-A- 4 102 694
- US-A- 4 248 809
- US-A- 4 253 646
- US-A- 5 000 427
- FREIDENBERG A.S.: "HOT REPAIR OF BLAST-FURNACE LININGS, Translated from OGNEUPORY, Ural Scientific-Research Inst for Ferrous Metals, USSR" REFRACTORIES, vol. 27, no. 3-4, March 1986 (1986-03), - April 1986 (1986-04) pages 175-180, XP001248290 USSR
- SHIMODA YOSHIO ; ONISHI MORITAKA ; HAMAMURA SAKAE ; OGAWA AKINOBU: "Mortar injection technology for blast furnace wall repair" SUMITOMO METALS, vol. 44, no. 1, January 1992 (1992-01), pages 112-117, XP001248291

## Description

This application claims priority to Japanese Application 2005-277548, filed in Japan on September 26, 2005.

### Field of Technology

The present invention relates to a method of injecting an aggregate into small gaps formed in a bottom portion of a blast furnace. The present method is able to repair a small gap having a width of about 1mm or less.

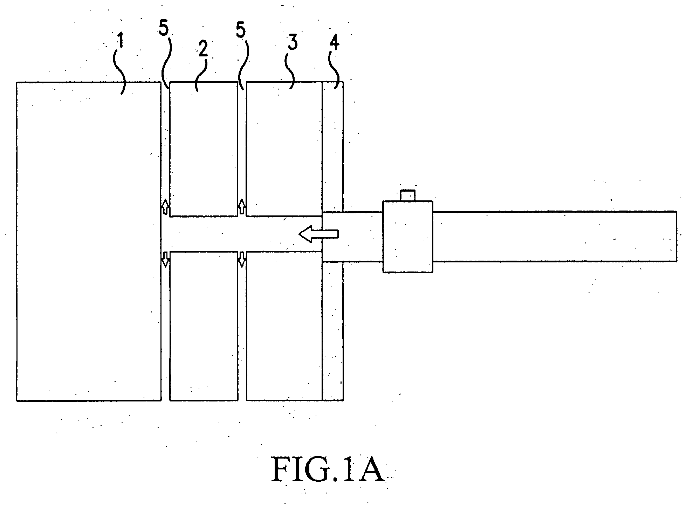

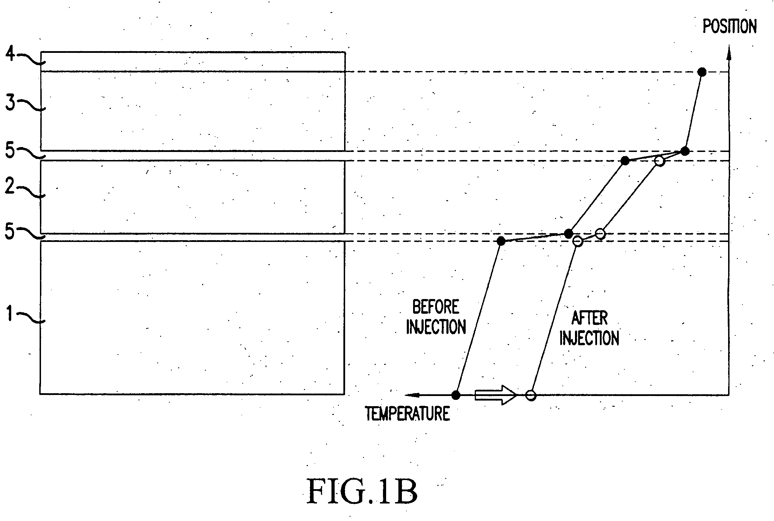

As shown in FIG.1A, a bottom portion of a blast furnace is composed of carbon brick 1, a (ramming) stamp 2, a stave 3 and a shell 4 in order from the innermost side. The main components of the stamp 2 are graphite and resin, and the stave is made of a metallic material. Cooling the outside of the shell 4 cools the bottom portion of the blast furnace. This lowers the temperature of the carbon brick 1 so as to avoid fusing damage. FIG.1B is a sectional view of a bottom portion of a blast furnace and illustrates temperature distributions before and after filler injection.

However, when the blast furnace is operated long term, a very small gap 5 having a width of about 1mm or less may be formed at the interface area between the carbon brick 1 and the stamp 2 and/or between the stamp 2 and the stave 3. Once the gap 5 is formed, thermal conduction from the carbon brick 1 to the shell 4 is restricted. This cases the temperature of the carbon brick1 having the gap to abnormally increase and thus shorten the life of the brick.

A high heat conductivity castable refractory containing metal aggregate has been developed. This is disclosed in JP2004-315348 . It was previously attempted to inject the above castable refractory into a small gap formed in the bottom portion of a blast furnace. This was attempted in order to restore the thermal conductivity of the inside of a furnace wall. However, it was difficult to fill in a small gap having a width of about 1mm or less while maintaining the fluidity of the castable refractory at a high temperature such as 200-250°C. Thus, the castable refractory was not satisfactory as a material for repairing a small gap formed in the bottom of a blast furnace.

### Summary of the Invention

An object of the present invention is to provide a method capable of solving the above-described problem. Thus, one object of the present invention relates to injecting an aggregate into a small gap formed in the bottom portion of a blast furnace. This is performed so that the restoration of the thermal conductivity of the inside of a furnace wall is successfully achieved.

A method and a composite as recited in the independent claims are provided. The dependent claims define embodiments.

The method of the present invention involves injecting an aggregate into a gap having a width of 1 mm or less formed in the bottom portion of a blast furnace, wherein the aggregate is a paste comprising: a metal aggregate having a maximum grain size of about 500µm or less; a refractory aggregate having a maximum grain size of about 500µm or less; and a bed material, wherein the metal aggregate and the refractory aggregate are dispersed in the bed material so as to form the paste.

In another aspect of the present invention, a roundness of the metal aggregate is about 30% or less, wherein the roundness is defined as (maximum diameter of metal aggregate - minimum diameter of metal aggregate)/(maximum diameter of metal aggregate) × 100%.

In yet another aspect of the present invention, both grain sizes of the metal aggregate and the refractory aggregate range from about 75µm to about 300µm.

According to the present invention, the bed material includes substantially a furan resin or an ethylene glycol.

In another aspect of the present invention, the metal aggregate includes copper grains.

In another aspect of the present invention, the refractory aggregate is at least one of spherical silica, spherical zirconia and spherical mullite.

According to the present invention, it is possible to fill in the small gap 5 having a width of about 1mm or less with a filler containing a metal aggregate, and a refractory aggregate while maintaining the fluidity of the filler at a high temperature such as 200-250°C. Consequently, the thermal conductivity and the strength of the bottom portion of the blast furnace can be quickly restored to thus avoid shortening the life of the brick.

### Brief Description of the Drawings

FIG.1A is a schematic diagram of a bottom portion of a blast furnace with an injector.
FIG.1B is a sectional view of a bottom portion of a blast furnace and illustrates temperature distributions before and after filler injection.
FIG.2 is a graph showing a relation between the injection success (%) and the maximum grain size of the aggregate.
FIG.3 is a graph showing a -relation between the internal friction coefficient and the percentage roundness of copper grain.
FIG.4 is a graph showing a relation between the ratio of the bed material and the total amount of the metal aggregate and the refractory aggregate (horizontal axis) and the viscosity of a filler of the mixture, of the bed material and the aggregate (vertical axis).
FIG.5 is a conceptual diagram illustrating injection in the case of narrow grain size distribution where injection flow is smooth.
FIG.6 is a conceptual diagram illustrating injection in the case of broad grain size distribution where a sudden blockage is caused thus making injection of filler impossible.
FIG. is a graph showing a summary of results regarding the study of the grain size wherein injectable grain size range of aggregate is shown.
FIG.8 is a conceptual diagram of the status of the filler mixture used in the present Example.

### Detailed Description of the Invention

In the present invention, a paste filler is formed by dispersing a metal aggregate and a refractory aggregate in a bed material. This paste material is then injected into a smallgap formed in the bottom portion of a blast furnace. The present metal aggregate preferably functions to restore the thermal conductivity of the bottom portion of the blast furnace after injection. As a metal aggregate, any metal aggregate may be used. However, a metal aggregate of copper grains is preferable in terms of heat resistance, thermal conductivity and cost. The present metal aggregate is preferably a spherical grain rather than a flaky grain or an amorphous grain so as to maintain fluidity during injection into the small gap. The most preferable spherical grain is an atomized copper powder (AtCu) which is formed by spraying molten copper in the air and allowing the sprayed copper to solidify into a spherical shape due to its surface tension.

The material for the refractory aggregate is not specifically limited. Any material can be used as long as the material has a sufficient heat resistance against the heat of the bottom portion of the blast furnace after injection. As for a shape of the refractory aggregate, similar to the metal aggregate, a spherical grain is preferable so as to maintain fluidity. Illustrative, but non-limiting examples of suitable refractory aggregate include spherical silica, spherical zirconia and spherical mullite.

The present bed material is preferably a substantially liquid material for fluidizing the metal aggregate and refractory aggregate. The present bed material is also preferably capable of maintaining fluidity at temperatures such as 200-250°C and to have an appropriate viscosity suitable for transporting the metal aggregate and the refractory aggregate. Suitable bed materials include low viscosity resins such as furan resin or low viscosity liquids such as ethylene glycol. The present bed material is preferably thermally decomposed after injection, leaving only the metal aggregate and the refractory aggregate behind. According to one aspect of the present invention, it is also possible to add a surface active surfactant to the bed material to increase slipping properties.

Preferable conditions to inject the above-described filler into a small gap have been experimentally investigated by the present inventors. As a result, it is found that the filling (injection) is largely influenced by factors such as the maximum diameter of the grains of the metal aggregate and the refractory aggregate, the roundness of the metal aggregate, the blend ratio of aggregate and bed material and/or the grain size difference between the metal aggregate and the refractory aggregate. Each factor is described below.

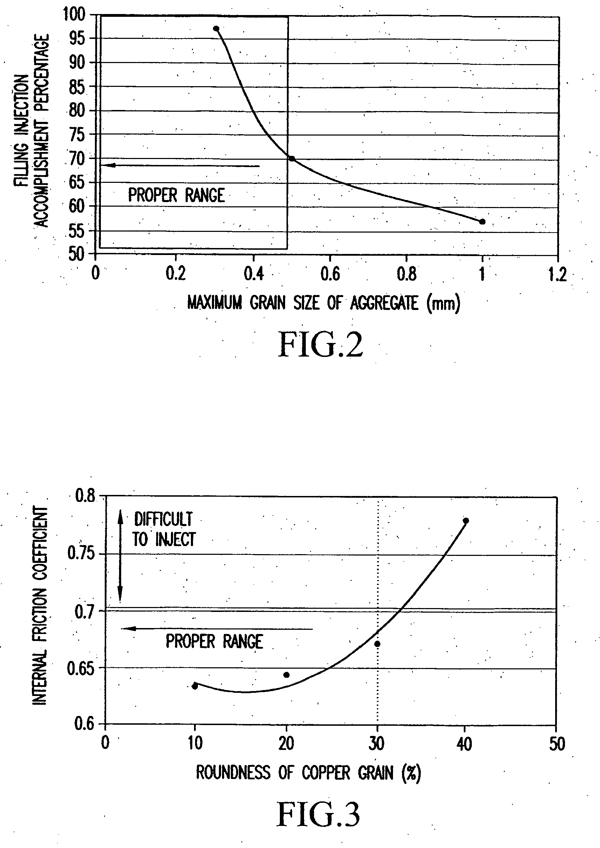

FIG.2 is a graph showing the relation between the maximum diameter of aggregate and the injection success (%). It is impossible to visually confirm the filling status of aggregate in a small gap on a real bottom portion of a blast furnace. Instead, an experimental device is prepared. The experimental device includes a pair of transparent resin panels facing to each other with a gap of about 1mm separating the panels. The filling status is visually checked while injecting a variety of paste aggregates using a pressure feed pump with a maximum discharging pressure of The injection success (%) is defined as M/N × 100%, where N is the number of injections attempted at N locations of the bottom portion of the blast furnace, and M is the number of smooth injections (N-M means the number of failed injections because the feeding pump pressure reaches an abnormally high pressure). As shown in the graph, it is preferable to use a metal aggregate and a refractory aggregate both of which have a maximum diameter of about 500µm or less in order to accomplish the injection filling. of the aggregate into the gap of about 1mm or less. If the maximum diameter exceeds 500µm, the injection success (%) quickly decreases. In view of this, each grain of metal aggregate and refractory aggregate preferably has a size of about 500µm or less. More preferably, each grain of metal aggregate and refractory aggregate preferably has a size of about 300µm or less.

The roundness of the metal aggregate is also a factor to be defined. FIG.3 is a graph showing the relation between the roundness of copper grain and the internal friction coefficient of the paste. The roundness is defined as (maximum diameter of metal aggregate - minimum diameter of metal aggregate)/(maximum diameter of metal aggregate) × 100%. If the roundness exceeds 30%, the internal friction coefficient increases. This makes pressure feeding difficult. In view of this, the roundness of the metal aggregate is preferably about 30% or less. More preferably, the roundness of the metal aggregate is about 20% or less.

When the metal aggregate and the refractory aggregate are injected in the form of a mixture with the bed material, it is preferable to maintain the viscosity of the mixture suitable to flow. This may be accomplished by adjusting the ratio of the bed material to the total amount of the metal aggregate and the refractory aggregate.

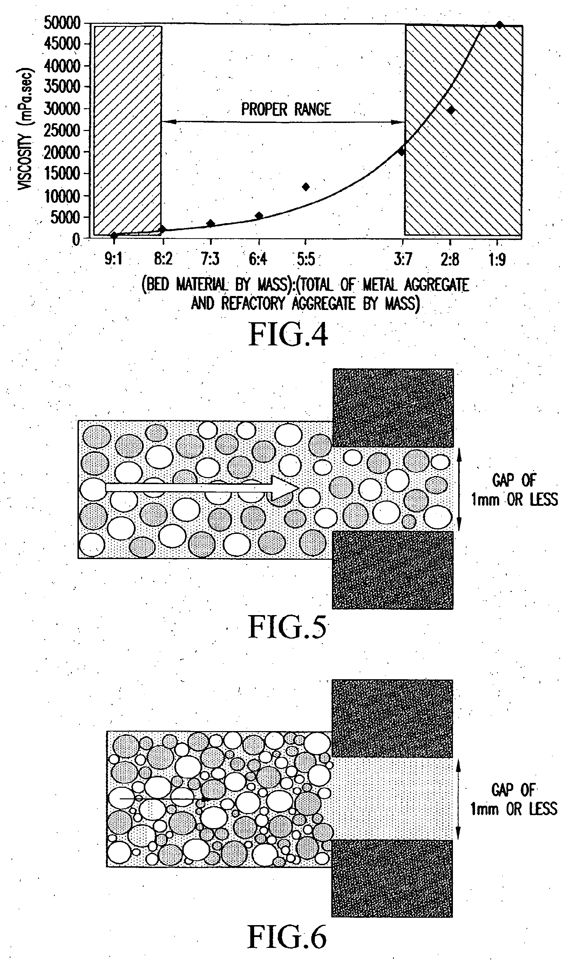

FIG.4 is a graph showing the relation between the ratio of the bed material to the total amount of the metal aggregate and the refractory aggregate (horizontal axis) and the viscosity of a filler of the mixture of the bed material and the aggregate (vertical axis). At the left end of the graph, copper grains with high specific gravity are easily precipitated because of very low viscosity. At the right end of the graph, injection becomes very difficult because of very high viscosity. For a smooth injection without separating the metal aggregate and the refractory aggregate from each other, it is preferable to maintain the viscosity of the filler in the range of about 2000-20000mPa · sec and to maintain the ratio of bed material and aggregate in mass ranging from about 8:2 to about 3:7.

The ratio of grain size between the metal aggregate and the refractory aggregate is another factor to determine the smoothness of injection of the filler into a small gap. FIG.5 is a conceptual diagram illustrating injection in the case of a narrow grain size distribution of both the metal aggregate and the refractory aggregate. FIG.6 is a conceptual diagram illustrating injection in the case of a broad grain size distribution. In the case of a broad grain size distribution, as shown in FIG.6 where a variety of size of grains are contained, spaces between the aggregate grains are extremely reduced. This may lead to a sudden blockage to thus make it impossible to further inject filler. On the contrary in the case of a narrow grain size distribution, as illustrated in FIG.5, the spaces between the aggregate grains are kept in moderation. This prevents sudden blockages and thus allows maintenance of smooth injection of the aggregate.

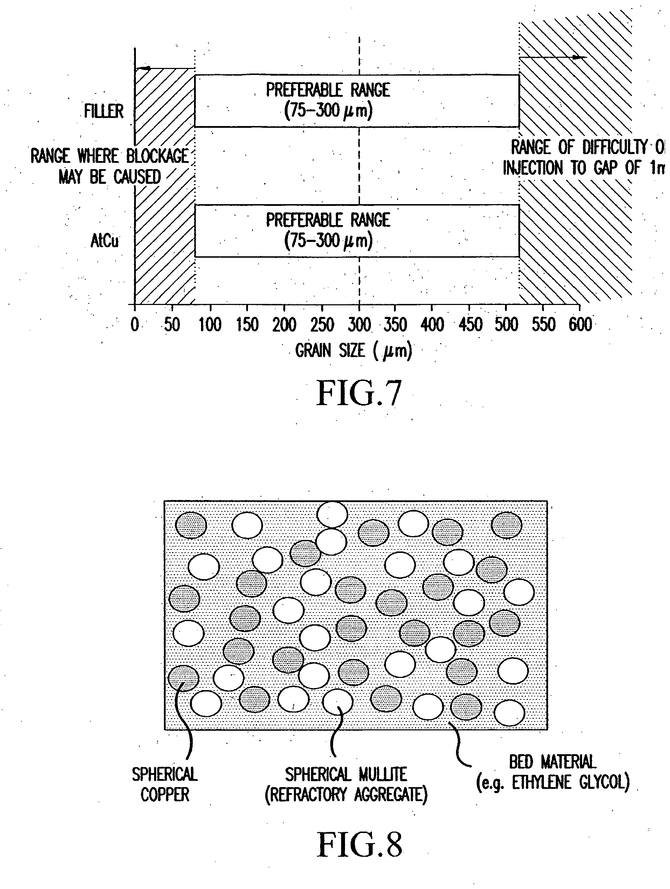

FIG.7 is a graph showing a summary of results regarding the study of the grain size described above. If the grain size contained in metal aggregate and/or refractory aggregate exceeds 300µm, injection to a gap having a width of about 1mm or less becomes difficult. If the grain size contained in the metal aggregate and/or the refractory aggregate becomes 75µm or smaller, the fluidity may be reduced as the spaces between grains tend to be reduced. It is thus preferable to prevent the grain size difference between the metal aggregate and the refractory aggregate from becoming large. Therefore, the grain sizes of both the metal aggregate and the refractory aggregate are preferably in the range of from about 75µm to about 300µm, more preferably in the range of from about 100µm to about 200µm.

### Example

The following three materials are stirred to form a uniform mixture of filler: (1) atomized copper powder (AtCu) of 50% by mass with a grain size ranging from 100µm to 200µm, (2) mullite beads of 30% by mass with a grain size ranging from 100µm to 200µm, and (3) a bed material of ethylene glycol of 20% by mass. The apparent specific gravity and the thermal conductivity of the atomized copper powder (AtCu) is 4.86 and 391.7W/m·K, respectively, and the upper temperature limit of the mullite beads is 1500°C. The status of the above three-component mixture is illustrated in FIG.8.

The above filler can be easily injected into a small gap of the bottom portion of a blast furnace under a feeding pressure of around 0.3MPa. This can improve the heat conductivity of the bottom portion of blast furnace and lower the temperature of the carbon brick by about 130°C compared to the status before injection. Thus, the present invention can recover deteriorated thermal conductivity of the inside of the furnace wall due to the formation of a small gap in the bottom portion of the blast furnace.

The invention being thus described, it will be obvious that the same may be varied in many ways. Such variations are not to be regarded as a departure from the scope of the present invention as defined by the claims, and all such modifications as would be obvious to one skilled in the art are intended to be included within the scope of the following claims.

## Claims

1. A method of injecting an aggregate into a gap having a width of 1 mm or less formed in a bottom portion of a blast furnace, comprising:
injecting a paste into said gap, wherein said paste comprises:
a metal aggregate having a maximum grain size of about 500µm or less;
a refractory aggregate having a maximum grain size of about 500µm or less; and
a bed material comprising substantially furan resin or ethylene glycol,
wherein the metal aggregate and the refractory aggregate are dispersed in the bed material so as to form the paste.

2. The method according to claim 1, wherein a roundness of the metal aggregate is about 30% or less, wherein the roundness is defined as (maximum diameter of metal aggregate - minimum diameter of metal aggregate)/(maximum diameter of metal aggregate) × 100%.

3. The method according to claim 1, the metal aggregate and the refractory aggregate both have grain sizes in the range of from about 75µm to about 300µm.

4. The method according to claim 1, wherein the metal aggregate comprises copper grains.

5. The method according to claim 1, wherein the refractory aggregate is at least one selected from the group consisting of spherical silica, spherical zirconia and spherical mullite.

6. The method according to claim 1, wherein a viscosity of the paste is in the range of from 2000 mPa · sec to 20000 mPa · sec.

7. The method according to claim 1, wherein each maximum grain size of the metal aggregate and the refractory aggregate is 300 µm or less.

8. The method according to claim 1, wherein the bed material maintains fluidity at temperatures in the range of from 200°C to 250°C.

9. A composition for filling a gap having a diameter of about 1mm or less in a bottom portion of a blast furnace, wherein said composition comprises:
a metal aggregate having a maximum grain size of about 500µm or less;
a refractory aggregate having a maximum grain size of about 500µm or less; and
a bed material comprising substantially furan resin or ethylene glycol,
wherein the metal aggregate and the refractory aggregate are dispersed in the bed material so as to form the paste.

10. A composition according to claim 9, wherein the bed material maintains fluidity at temperatures in the range of from 200°C to 250°C, and a viscosity of the paste is in the range of from 2000 mPa · sec to 20000 mPa · sec.

11. A composition according to claim 9, wherein each maximum grain size of the metal aggregate and the refractory aggregate is 300 µm or less.

## Patentansprüche

1. Verfahren zum Einspritzen eines Aggregats in einen in einem Bodenabschnitt eines Hochofens ausgebildeten Spalt mit einer Breite von 1 mm oder weniger, wobei das Verfahren aufweist:
Einspritzen einer Paste in den Spalt, wobei die Paste aufweist:
ein Metallaggregat mit einer maximalen Korngröße von ungefähr 500 µm oder weniger;
ein hitzebeständiges Aggregat mit einer maximalen Korngröße von ungefähr 500 µm oder weniger; und
ein Bettmaterial aufweisend im Wesentlichen Furanharz oder Ethylenglykol,
wobei das Metallaggregat und das hitzebeständige Aggregat in dem Bettmaterial so dispergiert sind, dass sie die Paste bilden.

2. Verfahren nach Anspruch 1, wobei eine Rundheit des Metallaggregats ungefähr 30% oder weniger beträgt, wobei die Rundheit als (maximaler Durchmesser von Metallaggregat - minimaler Durchmesser von Metallaggregat)/(maximaler Durchmesser von Metallaggregat) x 100% definiert ist.

3. Verfahren nach Anspruch 1, wobei das Metallaggregat und das hitzebeständige Aggregat beide Korngrößen im Bereich von ungefähr 75 µm bis ungefähr 300 µm aufweisen.

4. Verfahren nach Anspruch 1, wobei das Metallaggregat Kupferkörner aufweist.

5. Verfahren nach Anspruch 1, wobei das hitzebeständige Aggregat zumindest eines ausgewählt aus der Gruppe bestehend aus kugelförmigem Siliziumdioxid, kugelförmigem Zirconiumdioxid und kugelförmigem Mullit ist.

6. Verfahren nach Anspruch 1, wobei eine Viskosität der Paste im Bereich von 2000 mPa·s bis 20000 mPa·s liegt.

7. Verfahren nach Anspruch 1, wobei jede maximale Korngröße des Metallaggregats und des hitzebeständigen Aggregats 300 µm oder weniger beträgt.

8. Verfahren nach Anspruch 1, wobei das Bettmaterial bei Temperaturen im Bereich von 200°C bis 250°C fließfähig bleibt.

9. Zusammensetzung zum Füllen eines Spalts mit einem Durchmesser von ungefähr 1 mm oder weniger in einem Bodenabschnitt eines Hochofens, wobei die Zusammensetzung aufweist:
ein Metallaggregat mit einer maximalen Korngröße von ungefähr 500 µm oder weniger;
ein hitzebeständiges Aggregat mit einer maximalen Korngröße von ungefähr 500 µm oder weniger; und
ein Bettmaterial aufweisend im Wesentlichen Furanharz oder Ethylenglykol,
wobei das Metallaggregat und das hitzebeständige Aggregat in dem Bettmaterial so dispergiert sind, dass sie die Paste bilden.

10. Zusammensetzung nach Anspruch 9, wobei das Bettmaterial bei Temperaturen im Bereich von 200°C bis 250°C fließfähig bleibt, und eine Viskosität der Paste im Bereich von 2000 mPa·s bis 20000 mPa·s liegt.

11. Zusammensetzung nach Anspruch 9, wobei jede maximale Korngröße des Metallaggregats und des hitzebeständigen Aggregats 300 µm oder weniger beträgt.

## Revendications

1. Procédé d'injection d'un agrégat dans un espace présentant une largeur de 1 mm ou moins formé dans une partie sole d'un haut-fourneau, comprenant :
l'injection d'une pâte dans ledit espace, dans lequel ladite pâte comprend :
un agrégat métallique présentant une dimension granulométrique maximale d'environ 500 µm ou moins ;
un agrégat réfractaire présentant une dimension granulométrique maximale d'environ 500 µm ou moins ; et
un matériau de lit comprenant sensiblement une résine de furane ou un éthylène glycol,
dans lequel l'agrégat métallique et l'agrégat réfractaire sont dispersés dans le matériau de lit de manière à former la pâte.

2. Procédé selon la revendication 1, dans lequel une sphéricité de l'agrégat métallique est d'environ 30 % ou moins, dans lequel la sphéricité est définie comme étant (le diamètre maximal de l'agrégat métallique - le diamètre minimal de l'agrégat métallique) / (le diamètre maximal de l'agrégat métallique) × 100 %.

3. Procédé selon la revendication 1, dans lequel l'agrégat métallique et l'agrégat réfractaire présentent tous deux des dimensions granulométriques dans la plage allant d'environ 75 µm à environ 300 µm.

4. Procédé selon la revendication 1, dans lequel l'agrégat métallique comprend des grains de cuivre.

5. Procédé selon la revendication 1, dans lequel l'agrégat réfractaire est au moins un élément sélectionné parmi le groupe consistant en silice sphérique, en zircone sphérique et en mullite sphérique.

6. Procédé selon la revendication 1, dans lequel une viscosité de la pâte est dans la plage allant d'environ 2000 mPa·sec à environ 20000 mPa·sec.

7. Procédé selon la revendication 1, dans lequel chaque dimension granulométrique maximale de l'agrégat métallique et de l'agrégat réfractaire est de 300 µm ou moins.

8. Procédé selon la revendication 1, dans lequel le matériau de lit maintient une fluidité à des températures dans la plage allant d'environ 200°C à environ 250°C.

9. Composition pour remplir un espace présentant un diamètre d'environ 1 mm ou moins dans une partie sole d'un haut-fourneau, dans laquelle ladite composition comprend :
un agrégat métallique présentant une dimension granulométrique maximale d'environ 500 µm ou moins ;
un agrégat réfractaire présentant une dimension granulométrique maximale d'environ 500 µm ou moins ; et
un matériau de lit comprenant sensiblement une résine de furane ou un éthylène glycol,
dans laquelle l'agrégat métallique et l'agrégat réfractaire sont dispersés dans le matériau de lit de manière à former la pâte.

10. Composition selon la revendication 9, dans laquelle le matériau de lit maintient une fluidité à des températures dans la plage allant d'environ 200°C à environ 250°C, et une viscosité de la pâte est dans la plage allant de 2000 mPa·sec à 20000 mPa·sec.

11. Composition selon la revendication 9, dans laquelle chaque dimension granulométrique maximale de l'agrégat métallique et de l'agrégat réfractaire est de 300 µm ou moins.
